# EUROPEAN PATENT SPECIFICATION

(11) **EP 3 865 406 B1**
(45) Date of publication and mention of the grant of the patent: **07.08.2024**
(21) Application number: 20382097.2
(22) Date of filing: 12.02.2020
(51) Int. Cl.: B64D 41/00, B64D 31/00, F02C 9/00, F02C 9/28, H02G 3/00

(54) **METHOD FOR MODIFYING THE INSTALLATION OF AN ENGINE CONTROL DEVICE IN AN AIRCRAFT**
VERFAHREN ZUM UMBAU DER ANORDNUNG EINES MOTORSTEUERGERÄTS IN EINEM LUFTFAHRZEUG
PROCÉDÉ POUR MODIFIER L'INSTALLATION D'UN DISPOSITIF DE COMMANDE DE MOTEUR DANS UN AÉRONEF

(43) Date of publication of application: 18.08.2021
(73) Proprietor: Airbus Operations S.L.U., 28906 Getafe (ES)
(72) Inventor: MARTINEZ SANCHO, Alberto, 28906 Madrid (ES)
(74) Representative: Herrero & Asociados, S.L.

(56) References cited:
- EP-A1- 2 021 235
- FR-A1- 2 822 130
- US-A1- 2009 099 755
- US-A1- 2014 182 306
- US-A1- 2016 341 128
- US-A1- 2018 038 284

## Description

The invention relates to an aircraft and a method for modifying the installation configuration of an aircraft. More particularly the invention relates to the installation of devices for the sensing and controlling of an engine in the aircraft.

Most commercial aircraft comprise an auxiliary power unit (APU) which is an engine installed within the fuselage of the aircraft. Such engine provides auxiliary power when on ground or in the air.

In order to reduce fuel consumption of the aircrafts as well as to facilitate their maintenance, the APU is given more functions. Therefore additional sensing and controlling possibilities of such engine are required. However the configuration of already designed aircrafts - whether they are already built or not yet - is not easy. Any new function requires new devices, which themselves require new cabling, harnesses, etc. Therefore, introducing a new function in an existing aircraft is not always economically relevant.

The document US2014/182306 describes an auxiliary power unit (APU) system comprising an auxiliary power unit (APU) mounted in a compartment of an aircraft with an electric starter controller which regulates compressor, fuel module, and/or starter-generator. However this document is an example of an aircraft with a fixed configuration which does not allow improvement of their capabilities.

The invention aims to provide an aircraft which authorizes new functions in relation to an internal engine.

The invention particularly aims to provide a retrofit solution to existing aircrafts.

The invention aims to provide a simple and effective way of providing an aircraft with new sensing and controlling functions of an engine such as an APU.

The invention aims to provide a simple method to modify the configuration of an aircraft with a minimal impact on all already installed devices and cable harnesses.

An aircraft is proposed, comprising:
- an engine,
- a compartment, called engine compartment in which said engine is installed,
- an engine control device adapted to control at least one parameter of the engine, characterized in that the engine control device is installed in said engine compartment.

The engine may be installed in a compartment, called engine compartment, within a fuselage section, called engine section. In the whole text, characteristics described in relation to an engine compartment will be equivalently applicable to an engine section and vice-versa.

An engine in the context of the invention may be understood in a broad sense. Such engine may for example be a gas turbine, an internal combustion engine, etc.

The aircraft may further comprise a command device adapted to output commands for the engine control device

The engine control device may be adapted to control at least one component of the engine, such as for example an injector. The engine control device receives command signals from the command device and delivers corresponding control signals to one or more components of the engine. The engine control device may be adapted to process the command signals and produce control signals.

The command device may be activated by a human, or by a computer. The command device may be a computer. The command device may thus comprise a human-machine interface such as for example a lever or a microphone. The command device may also comprise a computer interface.

An output of the command device may be connected to an input of the engine control device. The command device and the engine control device are connected to each other by electric cables.

The aircraft may further comprise a jumper connector for electrically connecting at least one electrical cable connected to the command device to an electrical cable connected to the engine control device

An electrical cable, called command cable, connected to the command device may be adapted to transmit electrical command signals between the command device and the engine control device.

The aircraft may comprise sensor cables connected to sensors and adapted to transmit electrical sensing signals. In particular it may comprise at least one sensor cable between a sensor and the engine control device. The sensor may be adapted to sense a parameter relative to the engine or to the engine compartment.

The command cables may be used to transmit information signals between the engine control device and the command device. The engine control device may be able to control the APU based on its own software and data received from sensor(s) of the APU. The engine control device may output command signals to one or more engine control device(s). In such embodiments, the engine control device may only transmit status signals to the command device, said status signals containing status information based on one or more sensor data and/or one or more actuators status.

The aircraft may also comprise transmission cables adapted to transmit electrical signals along one or more fuselage section(s) of the aircraft. Transmission cables may in particular have one end in the engine section or at a separation between the engine section and an adjacent fuselage section, so as to be able to transmit electrical signal to or from the engine section.

The jumper connector may be adapted to replace an existing engine control device. The jumper connector may be adapted to connect command cables to transmission cables.

Thereby, where in a previous configuration an aircraft command and sensing line between a command device and an engine may have comprised, in the following order: a command device, one or more command cable(s), an engine control device, one or more transmission cable(s), one or more sensing cable(s) said sensing cable(s) being connected to at least some of said transmission cable(s), and one or more sensor(s) ; an aircraft according to the invention and obtained by a method according to the invention may comprise: a command device, one or more command cable(s), a jumper connector, one or more transmission cable(s), an engine control device, one or more sensing cable(s), and one or more sensor(s).

The engine control device of an aircraft may thus be relocated from a fuselage section different from the engine section, to the engine section. Also, a new engine control device with additional inputs may thus be installed in the engine section. The invention allows to add additional sensors to the engine or the engine section and connect them to a new engine control device without having to install additional transmission cables in the fuselage. Indeed, adding transmission cables is a complicated task as command device are generally situated in the nose section of the aircraft, while the engine section hosting an APU is generally situated in an aft section of the aircraft. The transmission cables are therefore particularly long and replacing these cables or adding new cables would imply significant work on the aircraft.

The invention allows a simple actualization of an aircraft production line, or a simple retrofit of an existing aircraft while adding new functionalities to the sensing and controlling of an engine.

The engine compartment may be housed in a fuselage section, called engine section.

The engine section may form an engine compartment.

The command device may be installed in a fuselage section of the aircraft different from the engine section.

In particular, when the engine is installed in an engine compartment, the command device may still be installed in a fuselage section different from the engine section in which the engine compartment is installed.

The engine may comprise at least one sensor connected to the engine control device.

The engine may comprise a plurality of sensors. Such sensors may be for example speed sensors, oil level sensors, temperature sensors, pressure sensors, etc..

The aircraft may comprise sensors situated in the engine section and connected to the engine control device. Such sensors may not be sensing parameters relative to the engine, but parameters relative to the engine section such as for example a temperature in the engine section, presence of fumes in the engine section, etc.

The engine may comprise one or more actuators. Such actuators may be for example valve actuators, an air intake actuator, etc..

The aircraft may comprise actuators situated in the engine section and connected to the engine control device, for example an air intake actuator.

The engine control device may be adapted to receive wireless signals from at least one sensor.

The installation of additional sensors or replacement of sensors may be facilitated with wireless sensors. The proximity of the engine control device placed in the engine section allows the use of low power, small distances wireless technologies.

The engine compartment may be insulated from its surroundings by a firewall.

The engine compartment may be encased in a firewall. The firewall may define the boundaries of the engine compartment. The engine compartment may be installed in and thermally insulated from its surrounding engine section.

Alternatively or in combination, the engine section is separated from an adjacent fuselage section by a firewall.

The engine control device according to the invention is installed within the firewall of the engine compartment.

The engine control device according to the invention may be fire resistant. In particular it may comprise a dedicated fireproof casing. The engine control device, installed within the engine compartment is thereby adapted to resist to fire in case of such event, such that it may continue to ensure its function.

The engine control device may be adapted to transmit data to the command device.

The engine control device may be adapted to receive sensing data from one or more sensor(s) adapted to sense at least one parameter relative to the engine or to the engine section. The engine control device may be adapted transmit such sensing data to another device, such as the command device for example. The engine control device may be adapted to process such sensing data and transmit a corresponding reporting signal to said other device.

The claimed invention is a method for modifying the installation configuration of an aircraft comprising a compartment, called engine compartment, with an engine installed in said engine compartment, in which:
- an engine control device
   - connected to command cables, said command cables being adapted to be connected to a command device and
   - connected to a first extremity of transmission cables adapted to transmit electrical signals in the aircraft,
   - is disconnected from both the command cables and the transmission cables,
- a jumper connector is connected in lieu of the engine control device between the command cables and the transmission cables,
- an engine control device is installed in the engine compartment, and connected to
   - a second extremity of the transmission cables and sensing cables connected to sensors.

The engine control device connected between the second extremity of the transmission cables and the sensing cables may be the same engine control device removed from its location between the command cables and the first extremity of transmission cables, or may be another engine control device, for example of a new generation.

Such method allow to retrofit an aircraft with improved capabilities. It allows for example to add additional sensors in the engine section, without having to install new transmission cables along the aircraft fuselage.

The transmission cables may be disconnected from the sensing cables before the engine control device is connected to the transmission cables and the sensing cables.

The engine control device is introduced between the transmission cables and the sensing cables.

A method according to the invention may further comprise adding at least one sensor in the engine compartment and connecting it to an input of the engine control device.

As mentioned, such additional sensors may have cables, or may be wireless. The installation of a new engine control device allows for the installation of such additional sensors. Indeed an engine control device with more inputs may be conceived and installed in the engine section than the engine control device previously installed at a remote location in the aircraft.

The invention also extends to other possible combinations of features described in the above description and in the following description relative to the figures, as long as they fall within the scope of the claims. Also described are aircraft sections comprising features described in relation to the aircraft and/or the method for modifying an aircraft; aircraft comprising features described in relation to the method for modifying an aircraft; and methods for modifying an aircraft comprising features described in relation to the aircraft.

Some specific exemplary embodiments and aspects of the invention are described in the following description in reference to the accompanying figures.
Figure 1 is a schematic representation of an aircraft in a cross-section along a longitudinal axis of the described aircraft.
Figure 2 is a schematic representation of a control and sensing line of an engine in an aircraft before the application of a method according to the invention.
Figure 3 is schematic representation of a control and sensing line of an engine in an aircraft, as described.
Figure 4 is a schematic representation of a method according to the invention.

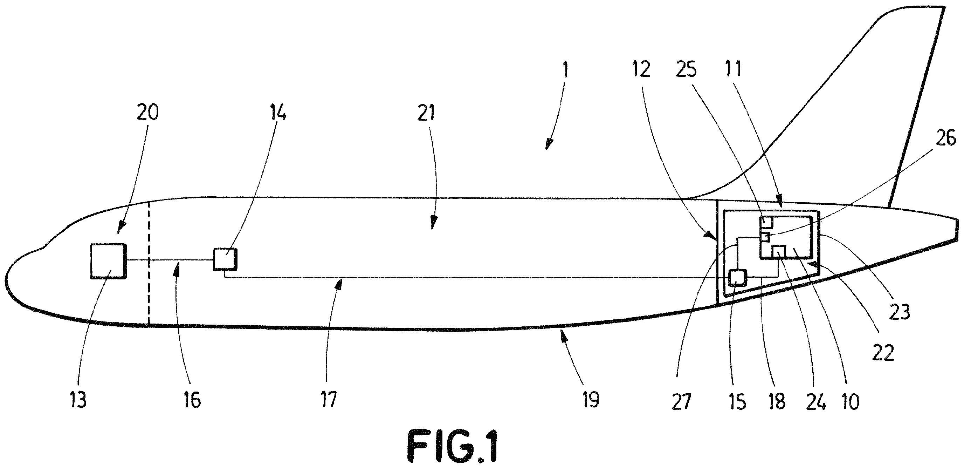

In Figure 1 an aircraft 1 is schematically represented.

It comprises a fuselage 19 made of a plurality of fuselage sections. In particular it comprises a nose section 20 situated at the front of the aircraft.

The aircraft comprises an engine 10, such as an auxiliary power unit (APU). The engine 10 is housed in an engine compartment 22.

The engine compartment 22 is situated in a fuselage section, called engine section 11, situated towards or at the back of the aircraft. The engine section 11 is separated from the nose section 20 by one or more intermediate fuselage sections 21. The engine section is separated from a neighboring forward section by a wall 12. The wall 12 may be a pressure bulkhead. The wall 12 may be a firewall.

The engine compartment 22 comprises a firewall 23. The firewall confines a volume in the engine compartment 22 in which the APU 10 is installed.

The aircraft comprises an engine control device 15 situated in the engine compartment 22. The engine control device 15 is connected through a controlling cable 27 to at least one controllable element 26 of the APU, such as for example an APU actuator. The engine control device 15 is also connected to a sensor 24 of the APU 10 through a sensing cable 18.

In this embodiment, the engine control device 15 is also connected to a wireless sensor 25 through a wireless connection. The engine control device 15 therefore comprises a wireless communication port. The proximity of the engine control device with the APU, both installed within the engine compartment 22, allow a wireless communication between one or more sensors 25 of the engine or of the engine compartment, without perturbing or being perturbed by other wireless communications. Moreover short distances wireless communication protocols with a low energy consumption may also be used. The engine control device 15 may also be wirelessly connected to one or more controllable element of the APU 10.

The aircraft comprises a command device 13 situated in the nose section. Such command device 13 may be an on-board computer. The command device is adapted to output command signals for the engine control device 15. The engine control device is adapted to convert such command signals into control signals for the controllable elements it controls.

The engine control device is connected to the command device 13 by one or more cables. In figure 1, the command device is connected to the engine control device through:
- command cables 16 connected to the command device 13 at a first end and to a jumper connector 14 at a second end,
- transmission cables 17 connected to the jumper connector 14 at a first end and to the engine control device 15 at a second end,
- the jumper connector 14 being adapted to electrically connect the command cables 16 to the transmission cables 17.

In this embodiment, the transmission cables 17 end at a connector crossing the wall 12. The engine control device 15 is connected to this connector.

Here, the jumper connector 14 is situated in one of the intermediate fuselage sections 21.

According to a method of the invention, the jumper connector 14 may replace an engine control device where an engine control device was previously located, while the engine control device is installed in the engine compartment. Thereby no wiring of the aircraft, in particular no command cables 16 or transmission cables 17, need to be modified or added. The engine control device 15 may assume more functions, such as receiving signals from additional sensors, without having to route additional cables in the intermediate fuselage sections 21.

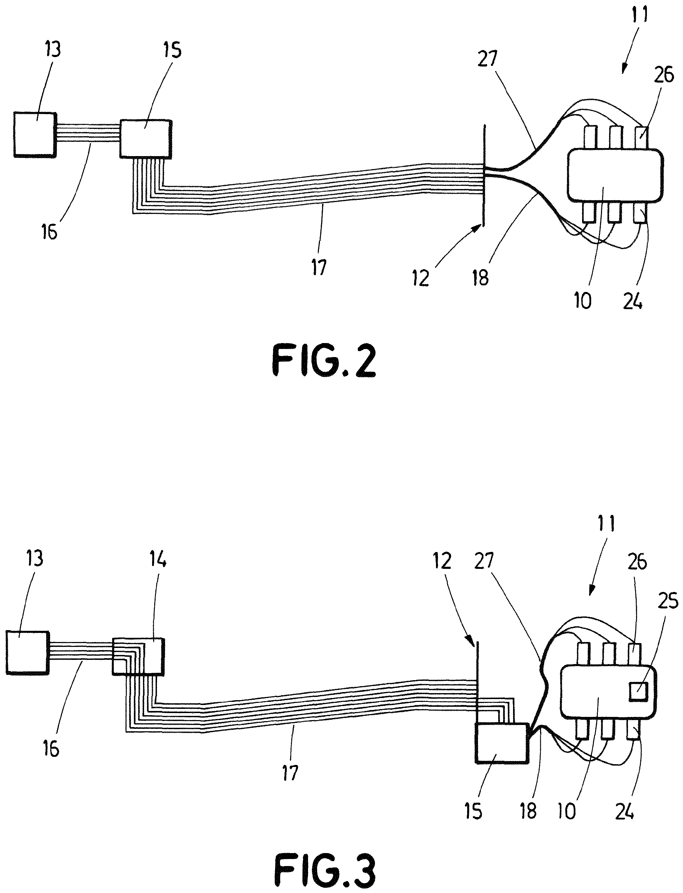

In figure 2, a configuration of an aircraft before it is modified by a method according to the invention is represented in which a command device 13 is connected to an engine control device 15 through command cables 16. The engine control device is connected to sensors 26 and controllable elements 24 of an APU 10 through respectively sensing cables 27 or control cables 18 and transmission cables, said sensing cables 27 and control cables 18 all being connected with the transmission cables 17 at a connecting interface at the wall 12 of an engine section 11.

In figure 3 a configuration of an aircraft, which may have been obtained by application of a method according to the invention to the aircraft configuration represented in figure 2 is represented. In this configuration, and similarly to that of figure 1, the engine control device 15 of figure 2 has been displaced to the engine section 11. The engine control device 15 may have been replaced by a new engine control device 15. The new engine control device may thereby comprise additional functions such as additional inputs for sensors and/or wireless communication means. The new engine control device may also be fireproof.

The previous engine control device that was installed in an intermediate fuselage section is replaced by a jumper connector 14 in order to ensure the continuity of signal transmission between the command cables 16 and the transmission cables 17.

The engine control device 15 is connected to the transmission cables 17 at the connecting interface of the wall 12, while the sensing cables 27 and control cables 18 are connected directly to the engine control device 15.

Moreover, in this aircraft, the APU has been equipped with an additional wireless sensor 25 adapted to communicate with the new engine control device 15 installed in the engine section 11.

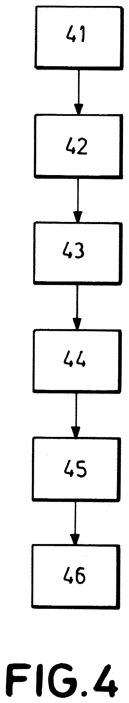

Steps of a method according to the invention, are schematically represented in figure 4. The following steps may be followed in this or a different order.

In a first step 41, an engine control device as represented in figure 2, installed in an intermediate fuselage section, is disconnected from the command cables 16 and from the transmission cables 17.

In a second step 42, a jumper connector 14 is connected between the command cables 16 and the transmission cables 17.

In a third step 43, sensing cables 27 and control cables 18 are disconnected from the transmission cables 17.

In a fourth step 44, an engine control device 15 is installed in the engine compartment 22.

In a fifth step 45, the engine control device 15 is connected to the transmission cables 17 on one side and to the sensing cables 27 and control cables 18 on the other side.

In a sixth step 46, an additional sensor 25 is added in the engine compartment 22 and connected to the engine control device 15, either with a cable or wirelessly.

Such method allow to obtain an aircraft 1 from an already existing aircraft.

The invention is not limited to the specific embodiments herein disclosed as examples. The invention also encompasses other embodiments not herein explicitly described, which may comprise various combinations of the features herein described, as long as they fall within the scope of the claims.

## Claims

1. Method for modifying the installation configuration of an aircraft (1) comprising a compartment, called engine compartment (22), with an engine (10) installed in said engine compartment (22), in which method:
- an engine control device (15):
• connected to command cables (16), said command cables being adapted to be connected to a command device (13) and
• connected to a first extremity of transmission cables (17) adapted to transmit electrical signals in the aircraft,
• is disconnected from both the command cables (16) and the transmission cables (17),
- a jumper connector (14) is connected in lieu of the engine control device (15) between the command cables (16) and the transmission cables (17),
- an engine control device (15) is :
• installed in the engine compartment (22),
• connected to
> a second extremity of the transmission cables (17) and
> sensing cables (18) connected to sensors (24,25).

2. Method according to claim 1, in which the transmission cables (17) are disconnected from the sensing cables (18) before the engine control device (15) is connected to the transmission cables (17) and the sensing cables (18).

3. Method according to any of claim 1 to 2, further comprising outputing commands by a command device (13) to the engine control device (15).

4. Method according to any of claim 1 to 3, further comprising adding at least one sensor (24, 25) in the engine compartment (22) and connecting it to an input of the engine control device (15).

## Patentansprüche

1. Verfahren zum Modifizieren der Einbaukonfiguration eines Luftfahrzeugs (1), das einen Triebwerksraum (22) genannten Raum mit einem in den Triebwerksraum (22) eingebauten Triebwerk (10) umfasst, wobei bei dem Verfahren:
- eine Triebwerksteuervorrichtung (15):
• an Befehlskabel (16) angeschlossen wird, wobei die Befehlskabel dazu geeignet sind, an eine Befehlsvorrichtung (13) angeschlossen zu werden, und
• an ein erstes äußerstes Ende von Übertragungskabeln (17) angeschlossen wird, die dazu geeignet sind, elektrische Signale in dem Luftfahrzeug zu übertragen,
• von sowohl den Befehlskabeln (16) als auch den Übertragungskabeln (17) getrennt wird,
- ein Überbrückungsanschluss (14) anstelle der Triebwerksteuervorrichtung (15) zwischen den Befehlskabeln (16) und den Übertragungskabeln (17) angeschlossen wird,
- eine Triebwerksteuervorrichtung (15):
• in den Triebwerksraum (22) eingebaut wird,
• angeschlossen wird an
➢ ein zweites äußerstes Ende der Übertragungskabel (17) und
➢ Sensorkabel (18), die an Sensoren (24, 25) angeschlossen sind.

2. Verfahren nach Anspruch 1, wobei die Übertragungskabel (17) von den Sensorkabeln (18) getrennt werden, bevor die Triebwerksteuervorrichtung (15) an die Übertragungskabel (17) und die Sensorkabel (18) angeschlossen wird.

3. Verfahren nach einem der Ansprüche 1 bis 2, ferner umfassend Ausgeben von Befehlen durch eine Befehlsvorrichtung (13) an die Triebwerksteuervorrichtung (15).

4. Verfahren nach einem der Ansprüche 1 bis 3, ferner umfassend Hinzufügen mindestens eines Sensors (24, 25) in dem Triebwerksraum (22) und Anschließen desselben an einen Eingang der Triebwerksteuervorrichtung (15).

## Revendications

1. Procédé pour modifier la configuration d'installation d'un aéronef (1) comprenant un compartiment, appelé compartiment moteur (22), un moteur (10) étant installé dans ledit compartiment moteur (22), dans lequel :
- un dispositif de commande de moteur (15) :
• connecté à des câbles de commande (16), lesdits câbles de commande étant conçus pour être connectés à un dispositif de commande (13) et
• connecté à une première extrémité de câbles de transmission (17) conçus pour transmettre des signaux électriques dans l'aéronef,
• est déconnecté des câbles de commande (16) ainsi que des câbles de transmission (17),
- un connecteur cavalier (14) est connecté à la place du dispositif de commande de moteur (15) entre les câbles de commande (16) et les câbles de transmission (17),
- un dispositif de commande de moteur (15) est :
• installé dans le compartiment moteur (22),
• connecté à
➢ une seconde extrémité des câbles de transmission (17) et
> des câbles de détection (18) connectés à des capteurs (24, 25).

2. Procédé selon la revendication 1, dans lequel les câbles de transmission (17) sont déconnectés des câbles de détection (18) avant que le dispositif de commande de moteur (15) soit connecté aux câbles de transmission (17) et aux câbles de détection (18).

3. Procédé selon l'une quelconque des revendications 1 et 2, comprenant en outre des commandes de sortie par un dispositif de commande (13) vers le dispositif de commande de moteur (15).

4. Procédé selon l'une quelconque des revendications 1 à 3, comprenant en outre l'ajout d'au moins un capteur (24, 25) dans le compartiment moteur (22) et sa connexion à une entrée du dispositif de commande de moteur (15).
